# EUROPÄISCHE PATENTSCHRIFT

(11) **EP 2 586 922 B1**
(45) Veröffentlichungstag und Bekanntmachung des Hinweises auf die Patenterteilung: **05.09.2018**
(21) Anmeldenummer: 12007458.8
(22) Anmeldetag: 31.10.2012
(51) Int. Cl.: E04B 1/76, E04F 13/08, F16B 7/14, F16B 13/04, F16B 15/02

(54) **Vorrichtung zur mechanischen Befestigung von Dämmstoffen an einer Unterkonstruktion**
Device for mechanically fastening insulating materials to a substructure
Dispositif de fixation mécanique de matières isolantes sur une infrastructure

(30) Priorität: 31.10.2011 DE 102011117277
(43) Veröffentlichungstag der Anmeldung: 01.05.2013
(73) Patentinhaber: RANIT-Befestigungssysteme GmbH, 45701 Herten (DE)
(72) Erfinder: Gräwe, Bernd, 45701 Herten (DE)
(74) Vertreter: Kross, Ulrich

(56) Entgegenhaltungen:
- DE-A1- 4 319 455
- DE-U1- 8 234 061
- DE-U1- 29 718 100
- US-A1- 2004 194 415
- US-A1- 2011 222 987

## Beschreibung

Die Erfindung betrifft eine Vorrichtung zur mechanischen Befestigung von Dämmstoffen an einer Unterkonstruktion, umfassend einen in den Dämmstoff mit einem Hohlschaft einsteckbaren Halteteller, wobei ein durch den Halteteller und den daran einstückig angeformten Hohlschaft hindurchgeführtes Befestigungselement in der Unterkonstruktion verankerbar ist, wobei das voreilende Ende des Hohlschafts angespitzt ausgebildet ist. Solche gattungsgemäßen Dämmstoffhalter mit Anspitzung ihres Hohlschafts sind aus der DE 297 18 100 U1, der US 2011/222987 A1 und der DE 43 19 455 A1 bekannt.

Zur Befestigung von Dämmstoffen, wie Styropor- und Polystyrolplatten oder dergleichen Hartschaummaterialien, an einen Untergrund, insbesondere eine Holzunterkonstruktion, kommen aus Kunststoff mit einem Steck- bzw. Hohlschaft hergestellte, eine Abstützung der Platten gewährleistende, großflächige Halteteller und Nägel, optional Stifte oder Einschlagschrauben, zum Einsatz, die durch Bolzensetzgeräte oder gaskolbenbetriebene Nagelgeräte eingetrieben werden, wie durch die EP 0 666 385 A1 oder EP 1 867 805 B1 bekannt geworden.

Hierbei werden in einem ersten Schritt die Halteteller an die beabsichtigte Position in den Dämmstoff gesteckt, wo sie ortsfest verbleiben. In einem zweiten Schritt werden dann Nägel, die in einem Magazin bevorratet sind, mit einem Druckluftnagelgerät, dieses vorrangig bei langen Nägeln, oder auch einem Gasnagler durch den Halteteller und durch den Dämmstoff in die Unterkonstruktion getrieben.

Zwar kann sich bei den bekannten Haltetellern mit Anspitzung des Hohlschafts der Hohlschaft des Haltetellers beim Einstecken in den Dämmstoff nicht mehr wegbiegen, so dass der Hohlschaft den Nagel zentrisch führen kann.

Der Erfindung liegt daher die Aufgabe zugrunde, eine gattungsgemäße Vorrichtung mit insbesondere verbesserten Betriebs- und Montageeigenschaften des Haltetellers zu schaffen.

Diese Aufgabe wird erfindungsgemäß durch die im kennzeichnenden Teil des unabhängigen Anspruchs angegebenen Merkmale gelöst.

Damit lässt sich nämlich erreichen, dass ein vor dem Verputzen stets in den Halteteller eingesetzter Verschlussdeckel, der einen die Wärmedämmung beeinträchtigenden, direkten Kontakt des metallischen Befestigungselements mit dem aufgebrachten Putz verhindert, auch dann sicher in seiner Einbaulage bleibt und vor bzw. sogar beim Verputzen nicht herausfallen kann, wenn der Kopf des Befestigungselements aufgrund des Einschlagens Verformungen aufweisen sollte, die nämlich ansonsten zu einem nur unzureichenden, zu lockeren Sitz des Verschlussdeckels im Halteteller führen könnten. Ein sicherer Halt wird durch die vorzugsweise eckigen, optional runden oder eine sonstige Kontur besitzenden Durchführungslöcher mit den darin bis in den Dämmstoff eingreifenden, sich dort fortsetzenden Stiften des Deckels gewährleistet.

Ein anderer erfindungsgemäßer Vorschlag sieht vor, dass an der Unterseite des Haltetellers umfangsverteilt Haltenasen oder dergleichen Vorsprünge, die sich im Dämmstoff verkrallen, angeordnet sind.

Der Verschlussdeckel ist nach einer vorteilhaften Ausgestaltung der Erfindung über eine flexible Lasche an einen Teilumfang des Haltetellers angespritzt. Beim Spritzgießen der aus Kunststoff bestehenden Halteteller kann gleichzeitig der Verschlussdeckel als Einheit mit dem Halteteller hergestellt werden. Zum Gebrauch lässt sich der Deckel dann vor Ort durch Ein- und Abreißen der dünnen Lasche einfach montieren. Optional könnte die Lasche eine solche Länge aufweisen, dass sich der Deckel durch Einschwenken bzw. -klappen in den Halteteller positionieren lässt.

Weitere Merkmale und Einzelheiten der Erfindung ergeben sich aus den Ansprüchen und der nachfolgenden Beschreibung von in den Zeichnungen dargestellten Ausführungsbeispielen. Es zeigen:
- Fig. 1: in einer Gesamtansicht einen Halteteller mit einer einseitigen Anspitzung bzw. -schärfung seines Hohlschaftes, in Richtung des Öffnungsquerschnitts gesehen;
- Fig. 2: den Halteteller der Fig. 1 in einem Längsschnitt;
- Fig. 3: den Halteteller der Fig. 1 in der Draufsicht;
- Fig.: 4 in einer schematischen Gesamtansicht einen Halteteller mit in einem Punkt zusammenlaufender, nach außen geschlossener Spitze seines Hohlschafts;
- Fig. 5: den Halteteller der Fig. 4 in einem Längsschnitt;
- Fig. 6: in einer schematischen Gesamtansicht eine weitere Ausführung eines Haltetellers, dessen Hohlschaft am vorderen Ende V-förmig eingeschnitten und mit zwei angeschärften Spitzen ausgebildet ist;
- Fig. 7: den Halteteller der Fig. 4 bzw. 6 - und insofern übereinstimmend mit Fig. 3 - in der Draufsicht;
- Fig. 8: in einem Längsschnitt einen wie in Fig. 2 gezeigten Halteteller, demgegenüber sogleich ausgebildet mit einem angespritzten Verschlussdeckel;
- Fig. 9: den Halteteller der Fig. 8 in der Draufsicht; und
- Fig. 10: den Halteteller der Fig. 8 und 9 im zur Befestigung von Dämmstoff an einen Untergrund mit einem Nagel als Befestigungselement montierten Endzustand.

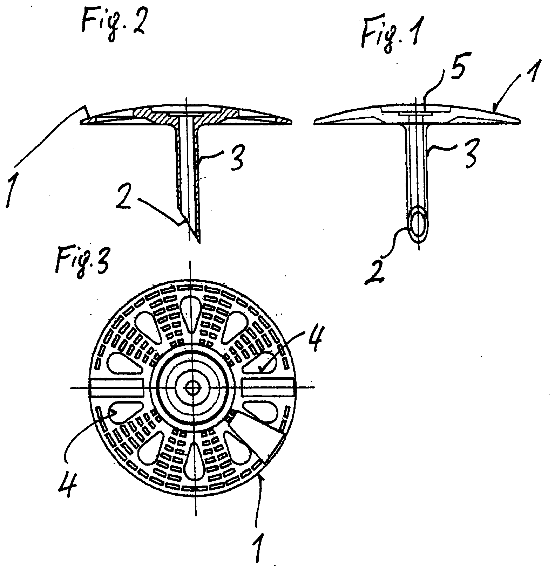

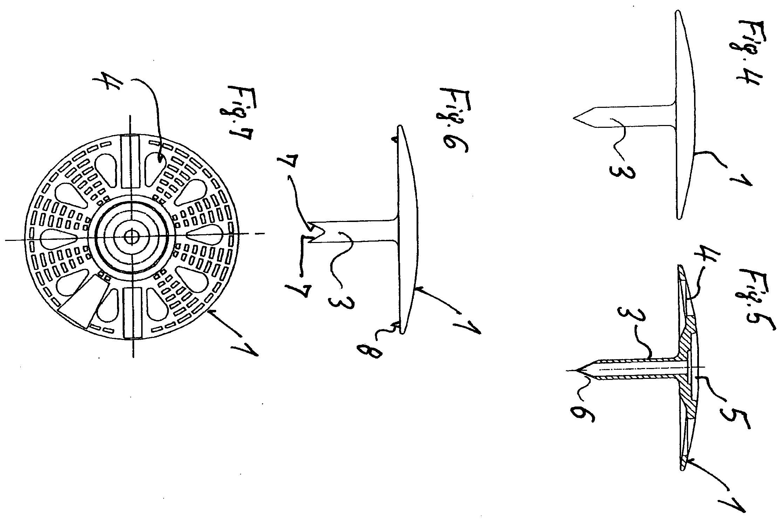

Ein in den Fig. 1 bis 3 dargestellter Halteteller 1 besitzt einen an seinem vorderen bzw. voreilenden Ende 2 einseitig angespitzten bzw. -geschärften Hohlschaft 3. Der Halteteller 1 ist - wie so ebenfalls der nach den Fig. 4, 5 bzw. 6, 7 - mit Putz-Durchgriffsöffnungen 4 versehen und weist zur Zentrierung für den aufgesetzten Lauf eines Nagelgerätes zum Eintreiben und Verankern des in eine Dämmstoffplatte mit seinem Hohlschaft eingesteckten Haltetellers 1 in eine Unterkonstruktion mit einem Nagel (nicht dargestellt) eine Zentrierausnehmung 5 auf.

Der in den Fig. 4 und 5 dargestellte Halteteller unterscheidet sich von der zuvor beschriebenen Ausführung dadurch, dass das vordere Ende des Hohlschafts 3 als nach außen geschlossene, in einem Punkt zusammenlaufende Spitze 6 ausgebildet ist. Die Fig. 5 verdeutlicht und lässt erkennen, dass die geschlossene Spitze 6 eine deutlich geringere Wanddicke als der übrige Hohlschaft 3 besitzt.

Nach Fig. 6 ist bei einer anderen Ausführung des Haltetellers 1 das voreilende, vordere Ende 2 des Hohlschafts 3 V-förmig eingeschnitten und daher mit zwei angeschärften Spitzen 7 versehen. Deren wie in Fig. 1 etwa ellipsenförmigen Öffnungsquerschnitte liegen einander gegenüber. In Fig. 6 ist noch angedeutet, dass sich an der Unterseite des Haltetellers 1 umfangsverteilt Haltenasen 8 vorsehen lassen, die sich mit dem Dämmstoff verkrallen.

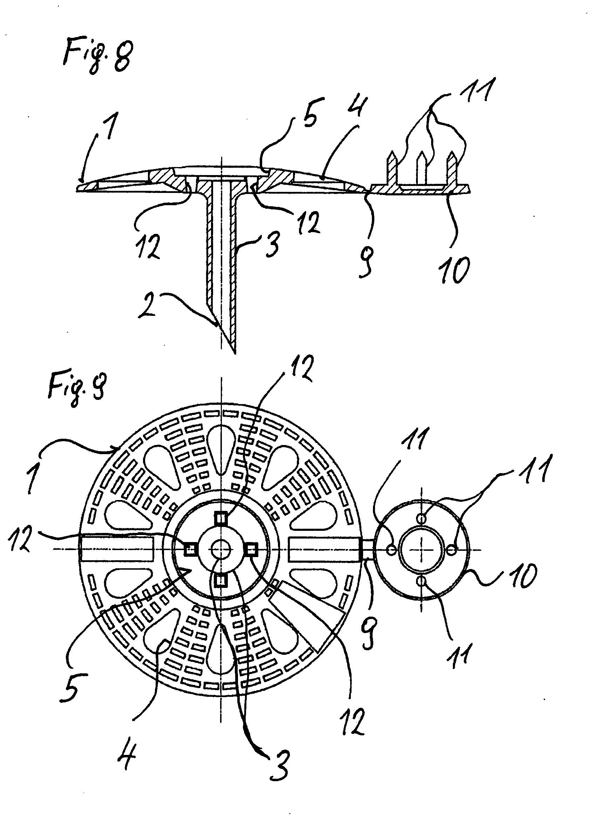

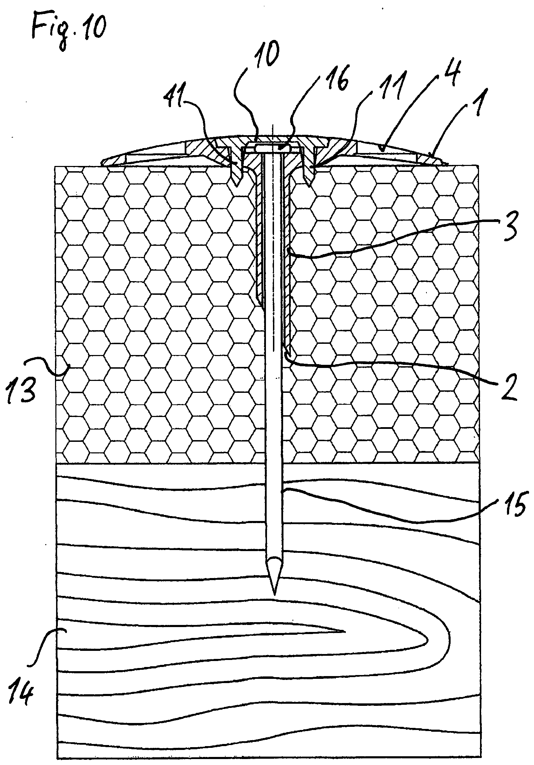

Wie sich den Fig. 8 und 9 entnehmen lässt, ist an den Halteteller 1 über eine dünne, flexible Lasche 9 ein Verschlussdeckel 10 mit an seiner in der Einbaulage (vgl. Fig. 10) dem Halteteller 1 zugewandten Unterseite vorkagenden Stiften 11 angespritzt. Den Stiften 11 sind in der Zentrierausnehmung 5 des Haltetellers 1 konzentrisch zum oben offenen Ende des Hohlschaftes 3 mehrere, der Anzahl der Stifte 11 entsprechende, hier rechteckige Durchführungslöcher 12 zugeordnet.

Nachdem zur Befestigung von Dämmstoff 13 an einen Untergrund bzw. eine Unterkonstruktion 14 der Halteteller 1 mit dem angespritzten Hohlschaft 3 durch Einschlagen eines Nagels 15 festgelegt worden ist, wird der vor der Montage über die Lasche 9 von dem Halteteller 1 abgetrennte Deckel 10 mit seinen Stiften 11 die Durchführungslöcher 12 durchgreifend in dem Dämmstoff 13 verankert, wobei der Kopf 16 des Nagels 15 nach außen eingekammert wird (vgl. Fig. 10)

### Bezugszeichenliste:

- 1: Halteteller
- 2: vorderes bzw. voreilendes Ende
- 3: Hohlschaft
- 4: Putz-Durchgriffsöffnung
- 5: Zentrierausnehmung
- 6: geschlossene Spitze
- 7: angeschärfte Spitze
- 8: Haltenase
- 9: Lasche
- 10: Verschlussdeckel/Deckel
- 11: Stift
- 12: Durchführungsloch
- 13: Dämmstoff
- 14: Untergrund/Unterkonstruktion
- 15: Befestigungselement/Nagel
- 16: Kopf/Nagelkopf

## Patentansprüche

1. Vorrichtung zur mechanischen Befestigung von Dämmstoffen (13) an einer Unterkonstruktion (14), umfassend einen in den Dämmstoff (13) mit einem Hohlschaft (3) einsteckbaren Halteteller (1), wobei ein durch den Halteteller und den daran einstückig angeformten Hohlschaft (3) hindurchgeführtes Befestigungselement (15) in der Unterkonstruktion (14) verankerbar ist, wobei das voreilende Ende (2) des Hohlschafts (3) angespitzt ausgebildet ist,
**dadurch gekennzeichnet,**
**dass** der Halteteller (1) an seiner Oberseite mit einer das Mundstück eines Gerätes zum Eintreiben des Befestigungsmittels aufnehmenden Zentrierausnehmung (5) ausgebildet ist, und dass in der Zentrierausnehmung (5) des Haltetellers (1) konzentrisch zum oben offenen Ende des Hohlschaftes (3) umfangsverteilt angeordnete Durchführungslöcher (12) vorgesehen sind, die Stifte (11) eines den Halteteller (1) nach außen verschließenden, nach der Befestigung des Dämmstoffs (13) an einer Unterkonstruktion (14) einen Kopf (16) des Befestigungselements (15) einkammernden Deckels (10) aufnehmen, wobei die Stifte (11) die Durchgangslöcher (12) durchgreifend eine bis in den Dämmstoff (13) hineinragende Länge aufweisen.

2. Vorrichtung nach Anspruch 1,
**gekennzeichnet durch**
an der Unterseite des Haltetellers (1) umfangsverteilt vorgesehene Haltenasen (8).

3. Vorrichtung nach Anspruch 1 oder 2,
**dadurch gekennzeichnet,**
**dass** der Deckel (10) über eine flexible Lasche (9) an einen Teilumfang des Haltetellers (1) angespritzt ist.

## Claims

1. A device for mechanically fastening insulating materials (13) on a substructure (14), comprising a retaining plate (1) that can be inserted into the insulating material (13) with a hollow shaft (3), wherein a fastening element (15) guided through the retaining plate and the hollow shaft (3) integrally formed thereon can be anchored in the substructure (14), and wherein the leading end (2) of the hollow shaft (3) is realized in a pointed fashion,
**characterized in**
**that** the retaining plate (1) is on its upper side realized with a centering recess (5) for accommodating the mouth piece of a device for driving in the fastening means, and in that clearance holes (12) are provided in the centering recess (5) of the retaining plate (1) and circumferentially distributed concentric to the upper open end of the hollow shaft (3), wherein said clearance holes accommodate pins (11) of a cover (10) that closes the retaining plate (1) toward the outside and encapsulates a head (16) of the fastening element (15) after the insulating material (13) has been fastened on a substructure (14), and wherein the pins (11) extending through the clearance holes (12) have such a length that they extend as far as into the insulating material (13).

2. The device according to claim 1,
**characterized by**
circumferentially distributed retaining lugs (8) arranged on the underside of the retaining plate (1).

3. The device according to claim 1 or 2,
**characterized in**
**that** the cover (10) is injection-molded on a partial circumference of the retaining plate (1) by means of a flexible strap (9).

## Revendications

1. Dispositif destiné à la fixation mécanique d'isolants (13) sur une substructure (14), comportant une rondelle de maintien (1) enfichable dans l'isolant (13) à l'aide d'une tige creuse (3), un élément de fixation (15) qui passe à travers la rondelle de maintien et la tige creuse (3), surmoulée en monobloc sur celle-ci étant susceptible d'être ancré dans la substructure (14), l'extrémité (2) de la tige creuse (3) étant conçue en étant taillée en pointe,
**caractérisé en ce que**
sur sa face supérieure, la rondelle de maintien (1) est conçue avec un évidement de centrage (5) recevant l'embout d'un appareil destiné à enfoncer le moyen de fixation, et **en ce que** dans l'évidement de centrage (5) de la rondelle de maintien (1) sont prévus des trous de passage (12), disposés en distribution sur la périphérie, de manière concentrique à l'extrémité ouverte sur le dessus de la tige creuse (3), qui reçoivent des goujons (11) d'un couvercle (10) fermant la rondelle de maintien (1) vers l'extérieur, encloisonnant une tête (16) de l'élément de fixation (15) après la fixation de l'isolant (13) sur une substructure (14), les goujons (11) traversant les trous de passage (12) présentant une longueur saillant jusque dans l'isolant (13).

2. Dispositif selon la revendication 1,
**caractérisé par**
des tenons de retenue (8) distribués sur la périphérie, sur la face inférieure de la rondelle de maintien (1).

3. Dispositif selon la revendication 1 ou 2,
**caractérisé en ce que**
le couvercle (10) est injecté par l'intermédiaire d'une patte (9) souple sur une périphérie partielle de la rondelle de maintien (1).
